# DEMANDE DE BREVET EUROPEEN

(11) **EP 4 843 851 A1**
(43) Date de publication de la demande: **25.11.2026**
(21) Numéro de dépôt: 26179750.0
(22) Date de dépôt: 20.05.2026
(51) Int. Cl.: B60W 30/12, B60W 50/14, B62D 6/00

(54) **PROCÉDÉ DE CENTRAGE AUTOMATIQUE SÉCURISÉ D'UN VÉHICULE DANS UNE VOIE DE CIRCULATION**

(30) Priorité: 23.05.2025 FR 2505540
(71) Demandeur: RENAULT s.a.s., 92100 Boulogne-Billancourt (FR)
(72) Inventeur: ANCORA, Andrea, 78084 GUYANCOURT (FR); EL HAJ SHHADE, Ghayath, 78084 GUYANCOURT (FR); RONDEL, Jérémie, 78084 GUYANCOURT (FR)
(74) Mandataire: Renault Group

(57) **Abrégé**

Un aspect de l'invention concerne un procédé de centrage automatique sécurisé d'un véhicule (200) dans une voie de circulation, comportant les étapes suivantes :
- Activation (101) d'une fonction de centrage automatique du véhicule (200) dans la voie de circulation ;
- Si un moyen de détection détecte que les mains du conducteur ne sont pas sur un volant du véhicule (200) pendant une première durée (D1), émission (102, 103) d'au moins une alerte à destination du conducteur ;
- Pendant l'étape d'émission (102, 103), si le moyen de détection détecte que les mains du conducteur ne sont pas sur le volant pendant une deuxième durée (D2), désactivation (104) automatique de la fonction de centrage ;
la valeur de la première durée (D1) et la valeur de la deuxième durée (D2) dépendent d'au moins une condition d'un ensemble de conditions liées à une détection relative au conducteur du véhicule (200), réalisée par une caméra intérieure du véhicule (200).

## Description

### DOMAINE TECHNIQUE DE L'INVENTION

Le domaine technique de l'invention est celui des fonctions de sécurité dans les véhicules, et plus particulièrement celui des fonctions de contrôle de la trajectoire dans les véhicules.

La présente invention concerne un procédé de centrage d'un véhicule dans une voie de circulation et en particulier un procédé de centrage automatique sécurisé d'un véhicule dans une voie de circulation. L'invention concerne également un véhicule et un produit-programme d'ordinateur pour la mise en œuvre du procédé.

### ARRIERE-PLAN TECHNOLOGIQUE DE L'INVENTION

La fonction de centrage de voie est une prestation permettant de centrer un véhicule dans la voie sur laquelle il circule, sans que le conducteur n'ait à appliquer de couple sur son volant. Cela ne dispense toutefois pas le conducteur de rester vigilant et d'être prêt à reprendre la main sur le véhicule, c'est pourquoi la fonction de centrage de voie est couplée avec une détection des mains du conducteur sur le volant, le plus souvent réalisée par un moyen de mesure de couple et/ou un moyen de mesure capacitif situé(s) dans le volant. Cette détection permet de déterminer quand le conducteur fait trop confiance à la fonction de centrage de voie et enlève ses mains du volant, et de mettre en œuvre une succession d'alertes jusqu'à la désactivation automatique de la fonction de centrage de voie, en fonction du temps pendant lequel le conducteur n'a pas ses mains sur le volant.

Théoriquement, pour améliorer la sécurité, il faudrait diminuer au maximum les durées d'alertes, ce qui permettrait de rappeler au conducteur qu'il doit rester totalement maitre de son véhicule et éviterait des accidents. Toutefois, les moyens de mesure actuels génèrent de nombreux faux positifs, par exemple les moyens de mesure de couple détectent souvent que les mains du conducteur ne sont pas sur le volant alors qu'elles y sont, en particulier en ligne droite où il est beaucoup plus difficile de détecter le couple résiduel qu'exerce le conducteur sur le volant. Quant aux moyens de mesure capacitifs, ils peuvent détecter que les mains du conducteur sont sur le volant alors qu'elles n'y sont pas, en particulier en cas de fortes températures. Ainsi, des durées d'alertes trop courtes entraîneraient de nombreuses désactivations indues de la fonction de centrage de voie, ce qui inciterait le conducteur à ne plus y avoir recours.

Les durées d'alertes sont donc actuellement le fruit d'un compromis entre un niveau de qualité de la prestation et la sécurité.

Un conducteur averti peut donc faire un usage abusif de la fonction, en enlevant régulièrement ses mains du volant sans avoir d'alertes intrusives et donc être assez peu attentif pendant de longues périodes.

Il existe donc un besoin d'empêcher tout usage abusif de la fonction de centrage de voie sans nuire à la prestation rendue.

### RESUME DE L'INVENTION

L'invention offre une solution aux problèmes évoqués précédemment, en permettant de s'assurer que le conducteur est maître de son véhicule quand la fonction de centrage de voie est activée, sans augmenter le nombre de désactivations indues de la fonction.

Un premier aspect de l'invention concerne un procédé de centrage automatique sécurisé d'un véhicule dans une voie de circulation, comportant les étapes suivantes :
- Activation d'une fonction de centrage automatique du véhicule dans la voie de circulation ;
- Si un moyen de détection détecte que les mains du conducteur ne sont pas sur un volant du véhicule pendant une première durée, émission d'au moins une alerte à destination du conducteur ;
- Pendant l'étape d'émission, si le moyen de détection détecte que les mains du conducteur ne sont pas sur le volant pendant une deuxième durée, désactivation automatique de la fonction de centrage ;
la valeur de la première durée et la valeur de la deuxième durée dépendant d'au moins une condition d'un ensemble de conditions, chaque condition de l'ensemble de conditions étant liée à une détection relative au conducteur du véhicule, réalisée par une caméra intérieure du véhicule.

Grâce à l'invention, la durée pendant laquelle les mains du conducteur ne sont pas détectées avant émission d'une alerte et la durée pendant laquelle les mains du conducteur ne sont pas détectées avant désactivation de la fonction de centrage de voie varient en fonction d'une ou plusieurs détections relatives au conducteur, réalisées par une caméra intérieure du véhicule. Les informations en provenance de la caméra sont alors utilisées pour confirmer ou infirmer la détection réalisée par le moyen de détection, et les durées varient alors selon le niveau de confiance que l'on a dans la détection que les mains du conducteur ne sont pas sur le volant.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, le procédé selon l'invention comporte les étapes suivantes :
- Si le moyen de détection détecte que les mains du conducteur ne sont pas sur le volant pendant la première durée, émission d'une première alerte ;
- Pendant l'étape d'émission de la première alerte, si le moyen de détection détecte que les mains du conducteur ne sont pas sur le volant pendant une troisième durée, émission d'une deuxième alerte ;
la valeur de la troisième durée dépendant d'au moins une condition de l'ensemble de conditions.

Selon une sous-variante de réalisation de la variante de réalisation précédente, la première alerte est une alerte visuelle et la deuxième alerte est une alerte sonore et visuelle.

Ainsi, le caractère intrusif des alertes augmente à mesure que la durée depuis la dernière détection des mains du conducteur sur le volant augmente.

Selon une variante de réalisation compatible avec la variante de réalisation précédente, l'ensemble de conditions comporte au moins une condition relative à une position de conduite du conducteur et/ou au moins une condition relative au regard du conducteur.

Ainsi, la détection réalisée par le moyen de détection est robustifiée à l'aide d'informations relatives à la position du conducteur et/ou à la vigilance du conducteur, fournies par la caméra.

Selon une sous-variante de réalisation de la variante de réalisation précédente, l'ensemble de conditions comporte une première condition selon laquelle la caméra détecte que le conducteur a ses bras le long du corps, et/ou une deuxième condition selon laquelle la caméra détecte que le conducteur tient le volant, et/ou une troisième condition selon laquelle la caméra détecte que le regard du conducteur présente les signes d'une distraction longue et/ou une quatrième condition selon laquelle la caméra détecte que le regard du conducteur présente les signes d'une distraction courte.

Selon une alternative de réalisation de la sous-variante de réalisation précédente, le moyen de détection est un moyen de mesure de couple situé dans le volant et :
- si la première condition, la deuxième condition, la troisième condition et la quatrième condition ne sont pas vérifiées, la première durée a une première valeur de première durée, la deuxième durée a une première valeur de deuxième durée et la troisième durée a une première valeur de troisième durée ;
- si la quatrième condition est vérifiée, la première durée a une deuxième valeur de première durée, la deuxième durée a la première valeur de deuxième durée et la troisième durée a la première valeur de troisième durée ;
- si la première condition ou la deuxième condition ou la troisième condition est vérifiée, la première durée a une troisième valeur de première durée, la deuxième durée a une deuxième valeur de deuxième durée et la troisième durée a une deuxième valeur de troisième durée ;
la première valeur de première durée étant supérieure à la deuxième valeur de première durée et la deuxième valeur de première durée étant supérieure à la troisième valeur de première durée, la première valeur de deuxième durée étant supérieure à la deuxième valeur de deuxième durée et la première valeur de troisième durée étant supérieure à la deuxième valeur de troisième durée.

Selon une autre alternative de réalisation de la sous-variante de réalisation précédente, le moyen de détection est un moyen de mesure capacitif situé dans le volant et :
- si uniquement la troisième condition ou uniquement la quatrième condition est vérifiée, la première durée a la première valeur de première durée, la deuxième durée a la première valeur de deuxième durée et la troisième durée a la première valeur de troisième durée ;
- si la deuxième condition et la quatrième condition sont vérifiées, la première durée a la deuxième valeur de première durée, la deuxième durée a la première valeur de deuxième durée et la troisième durée a la première valeur de troisième durée ;
- si la première condition est vérifiée, ou la deuxième condition et la troisième condition sont vérifiées, la première durée a la troisième valeur de première durée, la deuxième durée a la deuxième valeur de deuxième durée et la troisième durée a la deuxième valeur de troisième durée ;
la première valeur de première durée étant supérieure à la deuxième valeur de première durée et la deuxième valeur de première durée étant supérieure à la troisième valeur de première durée, la première valeur de deuxième durée étant supérieure à la deuxième valeur de deuxième durée et la première valeur de troisième durée étant supérieure à la deuxième valeur de troisième durée.

Ainsi, les durées sont diminuées et les alertes de plus en plus intrusives à mesure que le niveau de confiance dans la détection que les mains du conducteur ne sont pas sur le volant augmente.

Selon une variante de réalisation compatible avec les variantes de réalisation précédentes, l'étape de désactivation de la fonction de centrage comporte une sous-étape d'émission d'une troisième alerte.

Ainsi, le conducteur est averti de la désactivation de la fonction de centrage.

Un deuxième aspect de l'invention concerne un véhicule comportant des moyens pour mettre en œuvre le procédé selon l'invention.

Un troisième aspect de l'invention concerne un produit programme d'ordinateur comprenant des instructions qui, lorsque le programme est exécuté par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un véhicule sur lequel est appliqué le procédé selon l'invention, en fonction du temps.
- La figure 3 montre une représentation schématique d'un habitacle d'un véhicule selon l'invention.

### DESCRIPTION DETAILLEE

Sauf précision contraire, un même élément apparaissant sur des figures différentes présente une référence unique.

L'invention concerne un procédé permettant le centrage d'un véhicule dans une voie de circulation sur laquelle circule le véhicule et ceci de manière sécurisée et automatique, c'est-à-dire sans intervention d'un conducteur du véhicule.

Le véhicule est par exemple un véhicule automobile, tel qu'une voiture, un camion ou une moto.

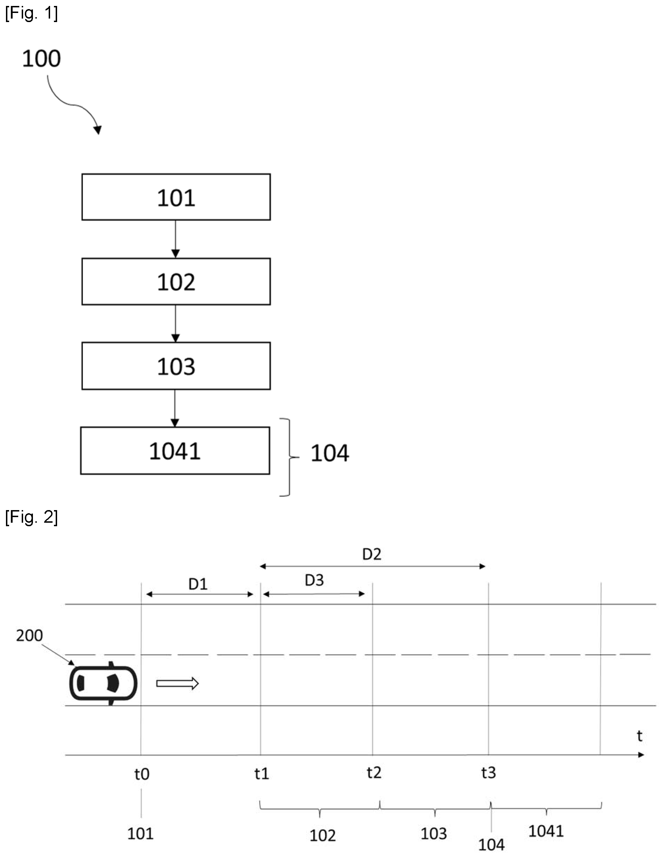

L'enchaînement des étapes du procédé 100 est illustré sur la figure 1 et leurs effets sur le véhicule 200 en fonction du temps sont illustrés sur la figure 2.

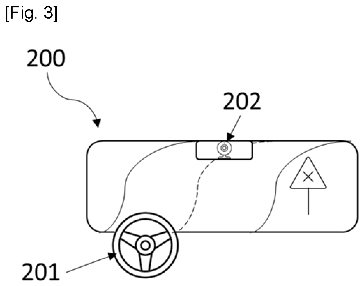

Un habitacle du véhicule 200 est représenté schématiquement sur la figure 3.

Comme illustré sur la figure 3, le véhicule 200 comporte un moyen de détection 201 permettant de détecter la présence des mains d'un conducteur du véhicule 200 sur un volant du véhicule 200.

Le moyen de détection 201 est par exemple situé dans le volant.

Le moyen de détection 201 est par exemple un moyen de mesure de couple permettant de mesurer le couple exercé par un conducteur sur le volant et/ou un moyen de mesure capacitif permettant de mesurer la capacité d'un condensateur situé dans le volant.

Le véhicule 200 comporte également une caméra 202 située à l'intérieur de l'habitacle du véhicule 200.

La caméra 200 est par exemple classiquement utilisée pour surveiller le conducteur et en particulier pour émettre des alertes en cas de fatigue ou distraction du conducteur.

Une première étape 101 du procédé 100 consiste à activer une fonction implémentée sur le véhicule 200, permettant le centrage automatique du véhicule 200 dans la voie de circulation.

Une telle activation peut être réalisée automatiquement ou par le conducteur du véhicule 200.

Sur la figure 2, la première étape 101 est réalisée à l'instant t0.

Une deuxième étape 102 du procédé 100 est mise en œuvre si le moyen de détection 201 détecte que les mains du conducteur ne sont pas sur le volant du véhicule pendant une durée, dite première durée D1, consécutive à l'activation de la fonction de centrage de voies lors de la première étape 101.

Sur la figure 2, la première durée D1 s'étend entre les instants t0 et t1.

La deuxième étape 102 consiste à émettre une alerte, dite première alerte, à destination du conducteur du véhicule 200.

La première alerte est par exemple une alerte visuelle, l'alerte visuelle consistant par exemple en l'affichage d'un message sur un écran du véhicule 200, le message étant par exemple « Gardez les mains sur le volant ».

Une troisième étape 103 du procédé 100 est mise en œuvre si le moyen de détection 201 détecte que les mains du conducteur ne sont pas sur le volant du véhicule pendant une durée, dite troisième durée D3, consécutive à la première durée D1, c'est-à-dire pendant la deuxième étape 102.

Sur la figure 2, la troisième durée D3 s'étend entre les instants t1 et t2.

La troisième étape 103 consiste à émettre une alerte, dite deuxième alerte, à destination du conducteur du véhicule 200.

La deuxième alerte est par exemple une alerte visuelle et sonore, l'alerte consistant par exemple en l'affichage d'un message sur un écran du véhicule 200, le message étant par exemple « Gardez les mains sur le volant » et en l'émission d'un signal sonore.

Une quatrième étape 104 du procédé 100 est mise en œuvre si le moyen de détection 201 détecte que les mains du conducteur ne sont pas sur le volant du véhicule pendant une durée, dite deuxième durée D2, consécutive à la première durée D1, qui s'étend pendant la ou les étapes 102, 103 d'alerte.

Sur la figure 2, la deuxième durée D2 s'étend entre les instants t1 et t3.

La quatrième étape 104 consiste à désactiver la fonction de centrage, et ainsi redonner la main au conducteur du véhicule 200.

La désactivation est réalisée automatiquement.

Sur la figure 2, la désactivation est réalisée à l'instant t3.

La quatrième étape 104 peut comporter une sous-étape 1041 d'émission d'une alerte, dite troisième alerte.

La troisième alerte est par exemple une alerte sonore et consiste en l'émission d'un signal sonore.

La valeur de la première durée D1, de la deuxième durée D2 et de la troisième durée D3 dépendent d'au moins une condition comprise dans un ensemble de conditions.

L'ensemble de conditions comporte au moins une condition.

Chaque condition de l'ensemble de condition est basée sur une détection réalisée par la caméra 202 à partir d'au moins une image acquise par ladite caméra 202, la détection étant relative au conducteur du véhicule 200, par exemple à une position de conduite du conducteur et/ou au regard du conducteur.

L'ensemble de conditions comporte par exemple une première condition selon laquelle la caméra 202 détecte que le conducteur a ses bras le long du corps, et/ou une deuxième condition selon laquelle la caméra 202 détecte que le conducteur tient le volant, et/ou une troisième condition selon laquelle la caméra 202 détecte que le regard du conducteur présente les signes d'une distraction longue et/ou une quatrième condition selon laquelle la caméra 202 détecte que le regard du conducteur présente les signes d'une distraction courte.

Les conditions permettant de conclure que le regard du conducteur présente les signes d'une distraction longue ou d'une distraction courte sont par exemple détaillées dans le protocole Euro NCAP.

Selon un premier mode de réalisation dans lequel le moyen de détection 201 est un moyen de mesure de couple situé dans le volant, la première durée D1 a une première valeur de première durée si la première condition, la deuxième condition, la troisième condition et la quatrième condition ne sont pas vérifiées, une deuxième valeur de première durée si la quatrième condition est vérifiée et une troisième valeur de première durée si la première condition ou la deuxième condition ou la troisième condition est vérifiée, la deuxième durée D2 a une première valeur de deuxième durée si la première condition, la deuxième condition, la troisième condition et la quatrième condition ne sont pas vérifiées ou si la quatrième condition est vérifiée, et une deuxième valeur de deuxième durée si la première condition ou la deuxième condition ou la troisième condition est vérifiée, la troisième durée D3 a une première valeur de troisième durée si la première condition, la deuxième condition, la troisième condition et la quatrième condition ne sont pas vérifiées ou si la quatrième condition est vérifiée, et une deuxième valeur de troisième durée si la première condition ou la deuxième condition ou la troisième condition est vérifiée.

Selon un deuxième mode de réalisation dans lequel le moyen de détection 201 est un moyen de mesure capacitif situé dans le volant, la première durée D1 a une première valeur de première durée si uniquement la troisième condition ou uniquement la quatrième condition est vérifiée, une deuxième valeur de première durée si la deuxième condition et la quatrième condition sont vérifiées et une troisième valeur de première durée si la première condition est vérifiée, la deuxième durée D2 a une première valeur de deuxième durée si uniquement la troisième condition ou uniquement la quatrième condition est vérifiée ou si la deuxième condition et la quatrième condition sont vérifiées, et une deuxième valeur de deuxième durée si la première condition est vérifiée, la troisième durée D3 a une première valeur de troisième durée si uniquement la troisième condition ou uniquement la quatrième condition est vérifiée ou si la deuxième condition et la quatrième condition sont vérifiées, et une deuxième valeur de troisième durée si la première condition est vérifiée.

La première valeur de première durée est supérieure à la deuxième valeur de première durée et la deuxième valeur de première durée est supérieure à la troisième valeur de première durée.

La première valeur de première durée vaut par exemple 15 secondes, la deuxième valeur de première durée vaut par exemple 7.5 secondes et la troisième valeur de première durée vaut par exemple 5 secondes.

La première valeur de deuxième durée est supérieure à la deuxième valeur de deuxième durée.

La première valeur de deuxième durée vaut par exemple 30 secondes, et la deuxième valeur de deuxième durée vaut par exemple 10 secondes.

La première valeur de troisième durée est supérieure à la deuxième valeur de troisième durée.

La première valeur de troisième durée vaut par exemple 15 secondes, et la deuxième valeur de troisième durée vaut par exemple 5 secondes.

## Revendications

1. Procédé (100) de centrage automatique sécurisé d'un véhicule (200) dans une voie de circulation, comportant les étapes suivantes :
- Activation (101) d'une fonction de centrage automatique du véhicule (200) dans la voie de circulation ;
- Si un moyen de détection (201) détecte que les mains du conducteur ne sont pas sur un volant du véhicule (200) pendant une première durée (D1), émission (102, 103) d'au moins une alerte à destination du conducteur ;
- Pendant l'étape d'émission (102, 103), si le moyen de détection (201) détecte que les mains du conducteur ne sont pas sur le volant pendant une deuxième durée (D2), désactivation (104) automatique de la fonction de centrage ;
le procédé (100) étant **caractérisé en ce que** la valeur de la première durée (D1) et la valeur de la deuxième durée (D2) dépendent d'au moins une condition d'un ensemble de conditions, chaque condition de l'ensemble de conditions étant liée à une détection relative au conducteur du véhicule (200), réalisée par une caméra (202) intérieure du véhicule (200).

2. Procédé (100) selon la revendication précédente, comportant les étapes suivantes :
- Si le moyen de détection (201) détecte que les mains du conducteur ne sont pas sur le volant pendant la première durée (D1), émission (102) d'une première alerte ;
- Pendant l'étape (102) d'émission de la première alerte, si le moyen de détection (201) détecte que les mains du conducteur ne sont pas sur le volant pendant une troisième durée (D3), émission (103) d'une deuxième alerte ;
la valeur de la troisième durée (D3) dépendant d'au moins une condition de l'ensemble de conditions.

3. Procédé (100) selon la revendication précédente, dans lequel la première alerte est une alerte visuelle et la deuxième alerte est une alerte sonore et visuelle.

4. Procédé (100) selon l'une quelconque des revendications précédentes, dans lequel l'ensemble de conditions comporte au moins une condition relative à une position de conduite du conducteur et/ou au moins une condition relative au regard du conducteur.

5. Procédé (100) selon la revendication précédente, dans lequel l'ensemble de conditions comporte une première condition selon laquelle la caméra (202) détecte que le conducteur a ses bras le long du corps, et/ou une deuxième condition selon laquelle la caméra (202) détecte que le conducteur tient le volant, et/ou une troisième condition selon laquelle la caméra (202) détecte que le regard du conducteur présente les signes d'une distraction longue et/ou une quatrième condition selon laquelle la caméra (202) détecte que le regard du conducteur présente les signes d'une distraction courte.

6. Procédé (100) selon la revendication précédente, dans lequel le moyen de détection (201) est un moyen de mesure de couple situé dans le volant et :
- si la première condition, la deuxième condition, la troisième condition et la quatrième condition ne sont pas vérifiées, la première durée (D1) a une première valeur de première durée, la deuxième durée (D2) a une première valeur de deuxième durée et la troisième durée (D3) a une première valeur de troisième durée ;
- si la quatrième condition est vérifiée, la première durée (D1) a une deuxième valeur de première durée, la deuxième durée (D2) a la première valeur de deuxième durée et la troisième durée (D3) a la première valeur de troisième durée ;
- si la première condition ou la deuxième condition ou la troisième condition est vérifiée, la première durée (D1) a une troisième valeur de première durée, la deuxième durée (D2) a une deuxième valeur de deuxième durée et la troisième durée (D3) a une deuxième valeur de troisième durée ;
la première valeur de première durée étant supérieure à la deuxième valeur de première durée et la deuxième valeur de première durée étant supérieure à la troisième valeur de première durée, la première valeur de deuxième durée étant supérieure à la deuxième valeur de deuxième durée et la première valeur de troisième durée étant supérieure à la deuxième valeur de troisième durée.

7. Procédé (100) selon la revendication 5, dans lequel le moyen de détection (201) est un moyen de mesure capacitif situé dans le volant et :
- si uniquement la troisième condition ou uniquement la quatrième condition est vérifiée, la première durée (D1) a la première valeur de première durée, la deuxième durée (D2) a la première valeur de deuxième durée et la troisième durée (D3) a la première valeur de troisième durée ;
- si la deuxième condition et la quatrième condition sont vérifiées, la première durée (D1) a la deuxième valeur de première durée, la deuxième durée (D2) a la première valeur de deuxième durée et la troisième durée (D3) a la première valeur de troisième durée ;
- si la première condition est vérifiée, ou la deuxième condition et la troisième condition sont vérifiées, la première durée (D1) a la troisième valeur de première durée, la deuxième durée (D2) a la deuxième valeur de deuxième durée et la troisième durée (D3) a la deuxième valeur de troisième durée ;
la première valeur de première durée étant supérieure à la deuxième valeur de première durée et la deuxième valeur de première durée étant supérieure à la troisième valeur de première durée, la première valeur de deuxième durée étant supérieure à la deuxième valeur de deuxième durée et la première valeur de troisième durée étant supérieure à la deuxième valeur de troisième durée.

8. Procédé (100) selon l'une quelconque des revendications précédentes, dans lequel l'étape (104) de désactivation de la fonction de centrage comporte une sous-étape (1041) d'émission d'une troisième alerte.

9. Véhicule (200) comportant des moyens pour mettre en œuvre le procédé (100) selon l'une quelconque des revendications précédentes.

10. Produit programme d'ordinateur comprenant des instructions qui, lorsque le programme est exécuté par un ordinateur, conduisent celui-ci à mettre en œuvre les étapes du procédé (100) selon l'une quelconque des revendications 1 à 8.
